# EUROPÄISCHE PATENTSCHRIFT

(11) **EP 2 263 916 B1**
(45) Veröffentlichungstag und Bekanntmachung des Hinweises auf die Patenterteilung: **04.04.2012**
(21) Anmeldenummer: 10466017.0
(22) Anmeldetag: 10.06.2010
(51) Int. Cl.: B60R 7/08

(54) **Dachablagefach zur Brillenablage**
Ceiling tray for storing spectacles
Vide-poches de toit pour le dépôt de lunettes

(30) Priorität: 15.06.2009 CZ 20090382
(43) Veröffentlichungstag der Anmeldung: 22.12.2010
(73) Patentinhaber: Skoda Auto a.s., 293 60 Mladá Boleslav (CZ)
(72) Erfinder: Budinsky, Marek, 78832 Staré Mesto pod Sneznikem (CZ)

(56) Entgegenhaltungen:
- DE-A1- 19 720 364
- DE-B3-102006 043 540

## Beschreibung

### Technisches Gebiet

Die Erfindung betrifft ein Dachablagefach, das im Dachhimmel eines Fahrzeuges an der Stelle zwischen den Sonnenblenden angeordnet ist und zum Ablegen und Aufbewahren von Brillen im Fahrzeug dient.

### Bisheriger Stand der Technik

Das Dokument DE19720364 offenbart ein Dachablagefach nach dem Oberbegriff von Anspruch 1. Dieser Brillenbehälter weist ein einseitig offenes Gehäuse und einen Gehäusedeckel auf, der in eine offene und geschlossene Stellung schwenkbar am Gehäuse angebracht ist. Die Darstellung dieser Lösung liegt darin, dass der Deckel als ein Aufnahmefach zum Einlegen der Brille ausgestaltet ist und dass im Gehäuse ein elastisches Gummiband angebracht ist, in dessen Richtung der Deckel beim Schließen verschwenkt, so dass dieses elastische Band die eingelegte Brille gegen die Innenseite des Fachdeckels drückt, wobei dieses elastische Gummiband beim geschlossenen Deckel in etwa parallel zum Deckel im Gehäuse verläuft. Der Gehäusedeckel weist eine Abstützung für den Nasensteg der in ihm eingelegten Brille auf. An der Innenseite des Deckels, an der Abstützung ist in gewissem Abstand von diesem Gehäusedeckel ein Brillenhalter angebracht, der mit einer Rastvorrichtung stufenverstellbar ist. In diesen Zwischenraum zwischen einem Brillenhalter und einem Gehäusedeckel kann die Brille eingesteckt werden. An dem der Rückwand des Gehäusedeckels zugewandten Ende hat der Brillenhalter seitlich überstehende Halteflügel.

Der Nachteil dieser Lösung liegt in der komplizierten und finanziell aufwändigen Konstruktion des Brillenablagefaches. Weiterer wesentlicher Nachteil liegt darin, dass für verschiedene Brillenformen und -größen der Halter kompliziert gestuft verstellt werden muss, dh. er hat für eine Position keine universelle, variablere Nutzung. Diese Stufenverstellung kann bei Verwendung verschiedener Brillenformen einen ungleichmäßigen Druck auf die Brille bewirken, wodurch eine Schwingbewegung der Brille verursacht werden kann. Da das elastische Band als ein Gummiband ausgebildet ist, besteht ein weiterer möglicher Nachteil in einer Materialermüdung und in der Haltbarkeit. Das elastische Band kann aus diesen Gründen aufreißen oder sich ausleiern. Beim Aufreißen des Bandes muß dieses kompliziert ausgetauscht werden. Beim Ausleiern des Bandes kann dazu kommen, dass das Band ausgeleiert und der Andruck der Halteflügel des Brillenhalters unzureichend wird und die Außenstöße unzureichend eliminiert werden, was zur Bewegungen und Klappergeräuschen der Brille sowie zur Beschädigung der Brillengläser führen kann.

### Darstellung der Erfindung

Diese Aufgabe wird durch eine einfache und sparsame Ausgestaltung eines Dachablagefach zur Brillenablage gelöst, das eine Bewegung dieser Brille in dem Ablagefach, das im Fahrzeug im vorderen Teil des Dachhimmels zwischen den Sonnenblenden angeordnet ist, verhindert. Das Ablagefach im Dachhimmel besteht aus einem Gehäuse und einem einseitig schwenkbaren Deckel, der in den seitlichen Öffnungen im Gehäuse angeordnet und um die durch die Mitte der Seitenöffnung des Gehäuses durchgehende Achse schwenkbar ist. In seitlichen Öffnungen des Gehäuses ist mittel seiner Wellen ein Andruckteil angeordnet, der sich um gleiche Drehachse dreht, jedoch unabhängig vom Drehen des Deckels um diese Achse. Der Andruckteil umfasst einen seitlichen Stift für die Befestigung einer Andruckfeder, wobei diese Feder auf der Welle des Andruckteils aufgesetzt ist und stützt sich mit einem Ende an der Rille im Gehäuse des Ablagefaches ab und am zweiten Ende auf dem seitlichen Stift aufgesetzt ist.

Das Gehäuse des Ablagefaches ist an einer Seite mit einer Führungsbahn ausgestaltet, welche die Bewegung des in ihr platzierten Stiftes eingrenzt. Zur Bewegung des Stiftes kommt es beim Drehen des Andruckteils durch die Einwirkung der Kraft, die durch den Druck des Deckels über die eingelegte Brille beim Schließen des Faches auf ihn ausgeübt wird. Im Deckelrand ist ein Schlitz ausgeführt, in den der Stift bei Erreichung der Endposition des Andruckteils beim geschlossenen Deckel des leeren Faches einrastet.

Der Andruckteil ist von der Oberseite mit Versteifungsrippen gefestigt, am Ende mit biegsamen Enden ausgestaltet und von der Unterseite, wo die Brille berührt wird, mit einer aufgesprühten, evtl. aufgeklebten erweichten Schicht beschichtet, die eine Schutzfunktion gegen eventuellen Kontakt der Brille mit dem eigentlichen Körper des Andruckteils hat.

Die Auflagefläche des Deckels umfasst eine die Rückwand des Deckels ausfüllende erweichte Einlage, die so eine Berührungsfläche bildet, um einen unmittelbaren Kontakt zwischen der Brille und dem Deckel zu vermeiden. Diese erweichte Einlage kann am Ende mit einem ausreichend hohen Halterand ausgestaltet werden, um das Herausfallen der Brille aus dem Fach beim geöffneten zu verhindern.

### Übersicht der Figuren der Zeichnungen

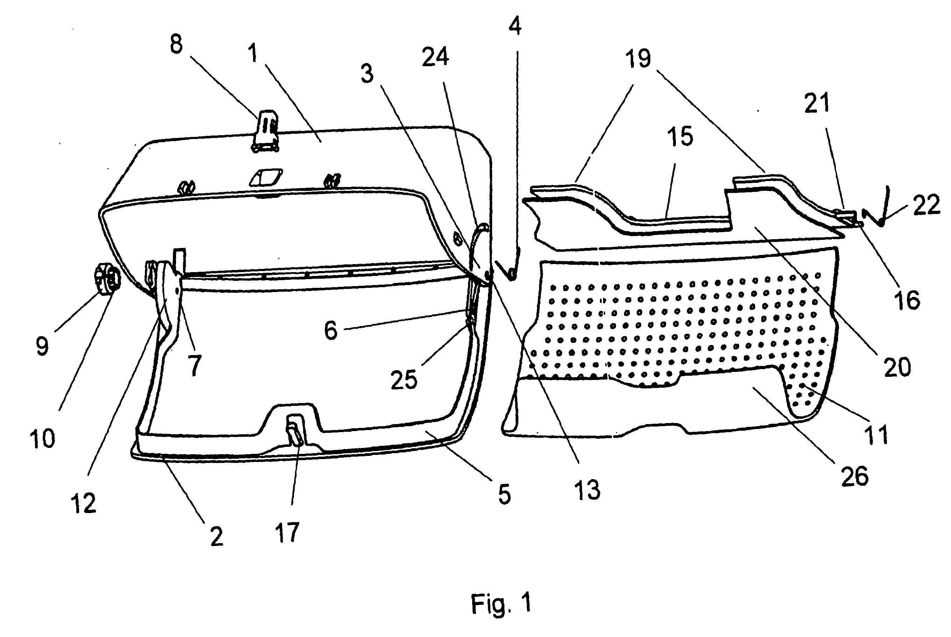

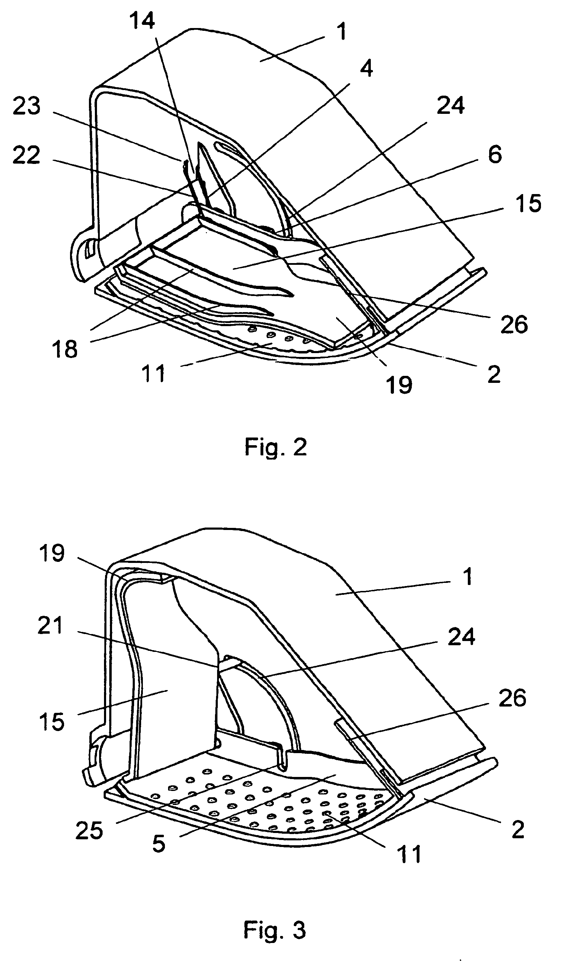

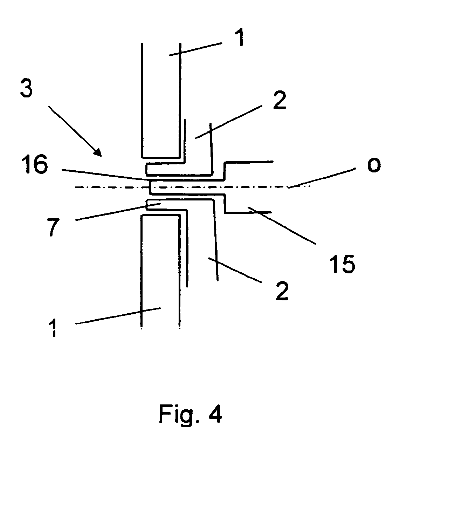

Die Fig. 1 zeigt eine Explosionsdarstellung des Brillenablagefaches im Dachhimmel, die Fig. 2 und 3 stellen in einer Axonometrieansicht den Schnitt des Brillenablagefaches im Dachhimmel dar. Fig. 4 stellt ein Detail der schematischen Anordnung der einzelnen, in der seitlichen Öffnung im unteren Bereich des Faches angeordneten Bestandteile dar.

### Ausführungsbeispiel der Erfindung

Die Fig. 1 zeigt einen Dachablagefach zur Brillenablage, das deren Bewegung im Gehäuse unterbindet. Dieses Ablagefach ist in ein Fahrzeug einbaubar und zwar an der Stelle des im vorderen Bereich des Dachhimmels zwischen den Sonnenblenden befestigten Rahmens. Das Dachablagefach, gemäß Fig. 1 bis 4, besteht aus dem eigentlichen Gehäuse 1 und einem einseitig schwenkbaren Deckel 2, wobei das Gehäuse 1 des Ablagefaches im Dachhimmel eingebaut ist und der dem Fahrzeuginterieur zugewandte Deckel 2 des Ablagefaches in etwa gleicher Ebene mit dem Dachhimmel verläuft.

Das Brillenablagefach, gemäß Fig. 1 bis 4, umfasst in seinem unteren Bereich an beiden Seiten seitliche Öffnungen 3 und der Deckel 2 umfasst an beiden Seiten ausgestaltete Hohlbolzen 7. Der Deckel 2 ist mit seinen seitlichen Hohlbolzen 7 in die seitliche Öffnungen 3 im unteren Bereich des Gehäuse 1 des Ablagefaches eingesetzt. Durch die Mitte der seitlichen Öffnungen 3 verläuft die Drehachse o, um die sich der Deckel 2 dreht.

Das Brillenablagefach umfasst ein PUSH-System 8, wobei das Gehäuse 1 des Ablagefaches in seiner Form und Konstruktion für das Einrasten des PUSH-Systems 8 ausgestaltet ist und den Deckel 2 in geschlossener Stellung hält. Von einer Seite ist in das Gehäuse 1 des Brillenablagefaches eine Silikonbremse 9 eingerastet, in deren Zahnrad 10 die Verzahnung 12 des Deckels 2 eingreift. Durch das Abrollen sowie die Funktion der Silikonbremse 9 und das Gewicht des Deckels 2 wird der Deckel 2 mit entsprechender Geschwindigkeit verschwenkt und damit das Ablagefach geöffnet. Der Deckel 2 wird in der offenen Stellung durch eine Formaussparung 13 im hinteren Bereich des Gehäuses 1 gehalten, an der sich der Deckel 2 bei selbsttätiger Erreichung der Endstellung - des maximalen Öffnens abstützt.

Das Aufschwenken des Deckels nach der Entriegelung mit dem PUSH-System 8, erzielt durch die Eindrückung des Deckels 2 mit einem Finger von der bei geschlossener Stellung des Deckels 2 sichtbaren Seite, wird durch die von einer am Hohlbolzen 7 des Deckels 2 aufgesetzten Druckfeder 4 hervorgerufene Kraft bewirkt. Die Feder 4 stützt sich mit einem Ende an der Rille 14 im Gehäuse 1 des Ablagefaches ab und rastet mit dem zweiten Ende in die Nute 6 im Versteifungsrahmen 5 des Deckels 2 ein.

in die seitliche Öffnungen 3 im unteren Bereich des Gehäuse 1 des Ablagefaches und zugleich in die Hohlbolzen 7 des Deckels 2 ist mit seinen seitlichen Wellen 16 der Andruckteil 15 eingefügt. Der Andruckteil 15 ist in den seitlichen Öffnungen 3 in gleicher Drehachse o wie der Deckel 2 angeordnet. Der Andruckteil 15 ist jedoch gegenüber der Drehung des Deckels 2 unabhängig drehbar. Die Wellen 16 sind an beiden Seiten des Andruckteils 15 ausgestaltet. Der andrückende Kunststoffteil 15 ist an der Oberseite mit Versteifungsrippen 18 gefestigt und am Ende mit biegsamen Enden 19 ausgestaltet. Der Andruckteil 15 ist von der Unterseite, dh. von der Seite, wo die Brille berührt wird, mit einer aufgesprühten, evtl. aufgeklebten erweichten Schicht 20 beschichtet, die eine Schutzfunktion gegen einen direkten Kontakt der Brille mit dem eigentlichen Körper des Andruckteils 15 erfüllt. Der Andruckteil 15 umfasst neben der Welle 16 für die Drehung auch einen seitlichen Stift 21 für die Aufnahme der Feder 22 des Andruckteils 15. Diese Feder 22 ist auf der Welle 16 des Andruckteils 15 aufgesetzt und stützt sich mit einem Ende an der Rille 23 im Gehäuse 1 ab und mit dem zweiten Ende, dem Loch, ist sie auf dem Stift 21 des Andruckteils 15 aufgesetzt.

In der Auflagefläche des Deckels 2 ist eine erweichte Einlage 11 angebracht, welche die Rückwand des Deckels 2 ausfüllt und so eine Berührungsfläche für die Brille bildet, wodurch ein unmittelbarer Kontakt der Brille mit dem Deckelkörper 2 sowie eventuelle Brillenbeschädigung vermieden wird. Die erweichte Einlage 11 weist am Ende einen ausreichend hohen Rand 26 auf. Die bei der offenen Stellung des Deckels 2 auf die erweichte Einlage 11 des Deckels 2 eingelegte Brille wird mit diesem Rand 26 der erweichten Einlage 11 gehalten und so wird das Herausfallen der Brille aus dem Deckel vermieden. Der Rand 26 ist als ein Saum der erweichten Einlage 11 ausgestaltet.

Das Gehäuse 1 des Ablagefaches ist an einer Seite mit einer Führungsbahn 24 ausgestattet, in der sich der Stift 21 beim Drehen des Andruckteils 15 durch Einwirkung der Kraft bewegt, die durch den Druck des Deckels 2 über die eingelegte Brille beim Schließen des Faches auf ihn ausgeübt wird. Die Führungsbahn 24 des Gehäuses 1 bestimmt genau die Bewegung des Stiftes 21 und damit auch des Andruckteils 15.

Im Versteifungsrahmen 5 des Deckels 2 ist ein Schlitz 25 ausgestaltet, damit der Stift 21 des Andruckteils 15 in den Versteifungsrahmen 5 bei Erreichung der Endposition des Andruckteils 15 beim geschlossenen Deckel 2 des leeren Ablagefaches einrastet.

Im oberen Bereich des Gehäuses 1 des Faches, gemäß. Fig. 3, sind an der Innenseite des Gehäuses 1 zwei Rippen (nicht abgebildet) an Stellen ausgestaltet, wo zur eventuellen Berührung der biegsamen Enden 19 des Andruckteils 15 beim Einlegen von extremgroßen Brillen kommen kann. Die Rippen befinden sich an der Stelle der Profilverbreitung in dem oberen Bereich des Gehäuses 1.

Die Handhabung erfolgt so, dass nach dem Eindrücken des Deckels 2 in Richtung zum Gehäuse 1 des Ablagefaches das PUSH-System 8 aktiviert wird, welches das Verriegelungselement 17 des Deckels 2 entriegelt und dieser öffnet sich dann selbsttätig. Nun befindet sich der Deckel 2 in der Endstellung, also maximal geöffnet. Die Brille werden in den Deckel 2 eingelegt, wobei sie in der offenen Stellung des Deckels 2 ausreichend durch den hohen Rand 26 der erweichten Einlage 11 gehalten werden und so wird das Herausfallen der Brille aus dem Deckel 2 vermieden.

Der Andruckteil 15 wird in der Endstellung durch die Andruckfeder 22 gehalten. Zwischen der Nullstellung des Andruckteils 15, dh. der Position, welche vom Andruckteil 15 beim Öffnen des Faches durch das Verschwenken des Deckels 2 erreicht wird, und der Endstellung, in der der Andruckteil 15 an die erweichte Einlage 11 an der Rückwand des Deckels 2 beim geschlossenen Deckel 2 bzw. Fach anliegt, ein Spielraum vorhanden ist, damit keine Schwingungen des Andruckteils 15 während der Fahrt entstehen, wenn in dem Fach keine Brille abgelegt wird.

Mit einem Fingerdruck am unteren Bereich des Deckels 2 beginnt das Fach sich zu schließen. Die eingelegte Brille drückt im Schließzeitpunkt auf den Andruckteil 15 an. In einer Gegenbewegung wirkt die Andruckfeder 22, die mit einem Druck auf die Brille wirkt und diese zu verdrängen versucht. Durch solche gegenseitige Kraftwirkung wird die Brille bereits beim Schließen des Deckels 2 fixiert und so die Position der Brille im Innenraum des Faches definiert.

Beim Einlegen einer extremgroßen Brille bewegt sich der Andruckteil 15 bis zu der hinteren Innenseite des Gehäuses 1 des Faches. Die biegsamen Enden 19 des Andruckteils 15 werden nach inneren Rippen des Gehäuses 1 des Faches deformiert, damit deren sicherer Rücklauf und somit auch die Rückbewegung, dh. die Rückkehr des Andruckteils 15 in die Ausgangsstellung, gesichert ist. Der Andruckteil 15 bleibt praktisch in der Position stehen, die durch die Brillengroße, dh. die Abmessungen der auf die Rückwand des Deckels 2 abgelegten Brille vorbestimmt ist.

Jetzt wird durch das Eindrücken des Deckels 2 mit der Hand das Brillenablagefach geschlossen. Durch das Eindrücken des Deckels 2 und die Aktivierung des PUSH-Systemes 8 wird der Deckel 2 in geschlossener Stellung verriegelt.

Nach dem Öffnen des Faches kann die Brille einfach aus dem Deckel 2 ausgenommen werden. Im solchen Fall erfüllt der Andruckteil 15 wieder die Rolle eines "Zwischenbodens" des Faches.

Das Gehäuse 1, der Deckel 2 sowie der Andruckteil 15 des Ablagefaches können aus einem Kunststoff, Metall oder Holz, oder derer Kombination ausgestaltet werden.

### Industrielle Nutzbarkeit

Das erfindungsgemäße Brillenablagefach kann in allen Fahrzeugen genutzt und vorteilhaft im vorderen Bereich des Dachhimmels zwischen den Sonnenblenden des Fahrzeuges angeordnet werden.

Das erfindungsgemäße Brillenablagefach kann in notwendiger Anzahl an beliebiger für Einbau angepasste und für die Passagiere benutzerfreundlich geeigneter Stelle im Fahrzeuginterieur ausgestaltet werden.

### Verwendete Bezeichnungen

- 1: Gehäuse des Brillenablagefaches
- 2: Deckel des Brillenablagefaches
- 3: Seitenöffnung im unteren Bereich des Gehäuses
- 4: Druckfeder
- 5: Versteifungsrahmen des Deckels
- 6: Nut im Versteifungsrahmen
- 7: Hohlbolzen des Deckels
- 8: PUSH-System
- 9: Silikonbremse
- 10: Zahnrad der Silikonbremse
- 11: erweichte Deckeleinlage
- 12: Verzahnung des Deckels
- 13: Formaussparung im hinteren Bereich des Gehäuses
- 14: Rille im Gehäuse
- 15: Andruckteil des Ablagefaches
- 16: Seitliche Wellen des Andruckteiles
- 17: Verriegelungselement des Deckels
- 18: Versteifungsrippe des Andruckteils
- 19: biegsames Ende des Andruckteils
- 20: erweichte Schicht des Andruckteils
- 21: seitlicher Stift des Andruckteiles
- 22: Feder des Andruckteils
- 23: Rille im Gehäuse
- 24: Führungsbahn des Gehäuses
- 25: Schlitz im Deckelrand
- 26: Rand der erweichten Einlage
- o: Drehachse des Deckels und Andruckteils

## Patentansprüche

1. Dachablagefach zur Brillenablage, das die Bewegung der Brille im Ablagefach unterbindet und im Fahrzeug im vorderen Bereich des Dachhimmels zwischen den Sonnenblenden angeordnet ist, bestehend aus einem Gehäuse (1) und einem in seitlichen Öffnungen (3) des Gehäuse (1) angeordneten und um die Drehachse (o) einseitig schwenkbaren Deckel (2), **dadurch gekennzeichnet, dass** in den seitlichen Öffnungen (3) mittels Wellen (16) ein Andruckteil (15) angeordnet ist, der um die Drehachse (o) unabhängig gegenüber dem Deckel (2) drehbar ist.

2. Dachablagefach nach Anspruch 1 **dadurch gekennzeichnet, dass** der Andruckteil (15) einen seitlichen Stift (21) für die Befestigung der Feder (22) umfasst, wobei die Feder (22) auf der Welle (16) des Andruckteils (15) aufgesetzt und mit einem Ende an einer Rille (23) im Gehäuse (1) des Ablagefaches abgestützt und mit dem zweiten Ende auf dem Stift (21) aufgesetzt ist.

3. Dachablagefach nach der Ansprüche 1 und 2 **dadurch gekennzeichnet, dass** das Gehäuse (1) des Ablagefaches an einer Seite mit einer Führungsbahn (24) ausgestattet, welche die Bewegung des in ihr platzierten Stiftes (21) beim Drehen des Andruckteils (15) durch Einwirkung der Kraft eingrenzt, die durch den Druck des Deckels (2) über die eingelegte Brille beim Schließen des Ablagefaches auf ihn einwirkt.

4. Dachablagefach nach der Ansprüche 1 bis 3 **dadurch gekennzeichnet, dass** am Versteifungsrahmen (5) des Deckels (2) ein Schlitz (25) ausgestaltet ist, damit der Stift (21) des Andruckteils (15) in den Versteifungsrahmen (5) bei Erreichung der Endposition des Andruckteils (15) beim geschlossenen Deckel (2) des leeren Faches einrastet.

5. Dachablagefach nach der vorgehenden Ansprüche **dadurch gekennzeichnet, dass** der Andruckteil (15) am Ende mit biegsamen Enden (19) ausgestaltet ist und von der Oberseite mit Versteifungsrippen (18) versteift werden kann.

6. Dachablagefach nach der vorgehenden Ansprüche **dadurch gekennzeichnet, dass** der Andruckteil (15) von der Unterseite, wo die Brille berührt wird, ein erweichte Schicht 20 aufweist, die eine Schutzfunktion gegen einen direkten Kontakt der Brille mit dem eigentlichen Körper des Andruckteils 15 erfüllt.

7. Dachablagefach nach der vorgehenden Ansprüche **dadurch gekennzeichnet, dass** die Auflagefläche des Deckels (2) eine erweichte Schutzeinlage 11 umfasst, welche die Rückwand des Deckels (2) ausfüllt und so eine Berührungsfläche mit der Brille bildet, um einen unmittelbaren Kontakt der Brille mit dem Deckelkörper (2) zu vermeiden.

8. Dachablagefach nach der vorgehenden Ansprüche **dadurch gekennzeichnet, dass** die erweichte Einlage (11) am Ende einen ausreichend hohen Halterand (26) zur Verhinderung des Herausfallens der Brille aus dem Fach beim geöffneten Deckel (2) aufweist.

## Claims

1. Ceiling tray for storing spectacles, which prevents movement of the spectacles in the tray and is arranged in the vehicle between the sun visors in the front region of the roof lining, the ceiling tray consisting of a housing (1) and a cover (2) which is arranged in lateral openings (3) in the housing (1) and can be pivoted on one side about the axis of rotation (o), **characterized in that** a pressing part (15) is arranged by means of shafts (16) in the lateral openings (3), said pressing part being rotatable about the axis of rotation (o) independently in relation to the cover (2).

2. Ceiling tray according to Claim 1, **characterized in that** the pressing part (15) comprises a lateral pin (21) for the fastening of the spring (22), the spring (22) being placed on the shaft (16) of the pressing part (15) and being supported at one end on a groove (23) in the housing (1) of the tray and being placed at the second end on the pin (21).

3. Ceiling tray according to Claims 1 and 2, **characterized in that** the housing (1) of the tray is equipped on one side with a guide track (24) which, upon rotation of the pressing part (15), limits the movement of the pin (21), which is placed inside said guide track, by the action of the force which acts on said pin by the cover (2) being pushed over the inserted spectacles during the closing of the tray.

4. Ceiling tray according to one of Claims 1 to 3, **characterized in that** a slot (25) is formed on the stiffening frame (5) of the cover (2) so that the pin (21) of the pressing part (15) latches into the stiffening frame (5) when the pressing part (15) reaches the final position when the cover (2) of the empty compartment is closed.

5. Ceiling tray according to the preceding claims, **characterized in that** the pressing part (15) is configured at the end with flexible ends (19) and can be stiffened from the upper side by means of stiffening ribs (18).

6. Ceiling tray according to the preceding claims, **characterized in that** the pressing part (15) has, from the lower side where contact is made with the spectacles, a softened layer (20) which has a protective function against direct contact of the spectacles with the actual body of the pressing part (15).

7. Ceiling tray according to the preceding claims, **characterized in that** the support surface of the cover (2) comprises a softened protective insert (11) which fills the rear wall of the cover (2) and thus forms a contact surface with the spectacles in order to avoid direct contact of the spectacles with the cover body (2).

8. Ceiling tray according to the preceding claims, **characterized in that** the end of softened insert (11) has a sufficiently high retaining border (26) to prevent the spectacles from dropping out of the compartment when the cover (2) is open.

## Revendications

1. Vide-poche de toit pour recevoir des lunettes, qui empêche les lunettes de bouger dans le vide-poche, et qui est disposé dans le véhicule dans la région avant de l'habillage du toit entre les pare-soleil, constitué d'un boîtier (1) et d'un couvercle (2) disposé dans des ouvertures latérales (3) du boîtier (1) et pouvant pivoter d'un côté autour de l'axe de rotation (o), **caractérisé en ce que** dans les ouvertures latérales (3), au moyen de goujons (16), est disposée une partie de pression (15) qui peut tourner autour de l'axe de rotation (o) indépendamment par rapport au couvercle (2).

2. Vide-poche de toit selon la revendication 1, **caractérisé en ce que** la partie de pression (15) comprend une goupille latérale (21) pour la fixation du ressort (22), le ressort (22) étant posé sur le goujon (16) de la partie de pression (15) et étant supporté par une extrémité contre une gorge (23) dans le boîtier (1) du vide-poche et étant posé avec sa deuxième extrémité sur la goupille (21).

3. Vide-poche de toit selon les revendications 1 et 2, **caractérisé en ce que** le boîtier (1) du vide-poche est muni sur un côté d'une voie de guidage (24) qui limite le mouvement de la goupille (21) placée à l'intérieur, lors de la rotation de la partie de pression (15) en cas d'application de la force qui agit sur le vide-poche par la pression du couvercle (2) sur les lunettes introduites lors de la fermeture du vide-poche.

4. Vide-poche de toit selon les revendications 1 à 3, **caractérisé en ce que** sur le cadre de renforcement (5) du couvercle (2) est réalisée une fente (25), afin que la goupille (21) de la partie de pression (15) s'encliquète dans le cadre de renforcement (5) lorsque la position d'extrémité de la partie de pression (15) est atteinte quand le couvercle (2) du vide-poche vide est fermé.

5. Vide-poche de toit selon les revendications précédentes, **caractérisé en ce que** la partie de pression (15) est munie à l'extrémité d'extrémités flexibles (19) et peut être renforcée par le dessus par des nervures de renforcement (18).

6. Vide-poche de toit selon les revendications précédentes, **caractérisé en ce que** la partie de pression (15) présente, par le dessous, là où sont posées les lunettes, une couche molle (20) qui assure une fonction de protection contre un contact direct des lunettes avec le corps proprement dit de la partie de pression (15).

7. Vide-poche de toit selon les revendications précédentes, **caractérisé en ce que** la surface d'appui du couvercle (2) comprend un insert de protection mou (11) qui remplit la paroi arrière du couvercle (2) et qui forme ainsi une surface de contact avec les lunettes, afin d'éviter un contact direct des lunettes avec le corps du couvercle (2).

8. Vide-poche de toit selon les revendications précédentes, **caractérisé en ce que** l'insert mou (11) présente à l'extrémité un bord de retenue (26) suffisamment haut pour empêcher que les lunettes ne tombent hors du vide-poche lorsque le couvercle (2) est ouvert.
